**Europäisches Patentamt**

**European Patent Office**

**Office européen des brevets**

(19)

(11) Veröffentlichungsnummer : **0 116 822**
**B1**

(12)

# EUROPÄISCHE PATENTSCHRIFT

(45) Veröffentlichungstag der Patentschrift :
03.12.86

(51) Int. Cl.⁴ : **G 21 C 19/32, G 21 C 19/36**

(21) Anmeldenummer : **84100060.7**

(22) Anmeldetag : **04.01.84**

(54) **Vorrichtung zum Beseitigen von länglichen Kerninstrumentierungssonden aus Kernreaktoren.**

(30) Priorität : **20.01.83 DE 3301814**

(43) Veröffentlichungstag der Anmeldung :
**29.08.84 Patentblatt 84/35**

(45) Bekanntmachung des Hinweises auf die Patenterteilung : **03.12.86 Patentblatt 86/49**

(84) Benannte Vertragsstaaten :
**CH DE IT LI SE**

(56) Entgegenhaltungen :
**BE-A- 682 592**
**DE-A- 2 942 406**
**FR-A- 2 324 094**
**US-A- 4 377 551**

(73) Patentinhaber : **KRAFTWERK UNION AKTIENGE-SELLSCHAFT**
**Wiesenstrasse 35**
**D-4330 Mülheim (Ruhr) (DE)**

(72) Erfinder : **Kiewitz, Hans-Christoph**
**Rhönstrasse 11**
**D-6368 Bad Vilbel (DE)**
Erfinder : **Tennie, Manfred**
**Dresdner Strasse 12**
**D-8754 Grossostheim (DE)**
Erfinder : **Dietsch, Armin**
**Frankfurter Strasse 25**
**D-6050 Offenbach (DE)**

(74) Vertreter : **Mehl, Ernst, Dipl.-Ing. et al**
**Postfach 22 01 76**
**D-8000 München 22 (DE)**

EP 0 116 822 B1

## Beschreibung

Die Erfindung betrifft eine Vorrichtung zum Beseitigen von länglichen Kerninstrumentierungssonden, insbesondere Strahlungsdetektoren, aus Kernreaktoren, mit einer Führung für die zu beseitigenden Sonden, einer Schere zum Zerlegen in Abschnitte und einem Köcher zur Aufnahme der Abschnitte.

Eine solche Vorrichtung ist aus der Zeitschrift « Nuclear Engineering International », September 1982, Seiten 52 und 53 bekannt. Dazu heißt es, daß die kleinere gleichmäßige Größe der Abschnitte eine dichtere Packung erlaubt, so daß im Gegensatz zu früher nur noch ein einziger Behälter benötigt wird. Damit soll eine Verringerung des radioaktiven Abfallvolumens erreicht werden und entsprechend kleinere Transport- und Lagerkosten.

Die Erfindung geht von der Aufgabe aus, das Beseitigen von Kerninstrumentierungssonden weiter zu verbessern, damit insbesondere der Arbeits- und Abschirmungsaufwand noch geringer wird. Dazu ist erfindungsgemäß vorgesehen, daß die Führung eine Weiche zum Umgehen des Köchers umfaßt, die zusammen mit der Schere so gesteuert wird, daß längere Sondenabschnitte mit einem kleinen Strahlungspegel in den Köcher gelangen, während Sondenteile mit einem höheren Strahlungspegel in mehrfach kleinere Abschnitte zerteilt werden, die in einem abgeschirmten Lagerbehälter geführt werden.

Bei der Erfindung wird, kurz gesagt, die Zerlegung der Kerninstrumentierungssonden strahlungsabhängig variiert. Dabei werden wenig oder gar nicht strahlende Teile mit großer Länge in den Köcher eingegeben. Teile starker Aktivierung, die strahlungstechnisch besonders behandelt werden müssen, werden dann in viel kleinere Abschnitte zerlegt. Deshalb ist ihre Einfüllung in einen Abschirmbehälter mit guter Raumausnutzung möglich. Die wenig oder gar nicht strahlenden Teile können dagegen ohne besondere Abschirmung transportiert und gegebenenfalls beseitigt werden. Daraus ergeben sich wesentliche Einsparungen, gerade weil im Gegensatz zum Bekannten nicht alle Abschnitte der Sonden in einen einzigen Behälter eingefüllt werden.

Die Steuerung der Weiche und der Schere kann besonders günstig durch ein Strahlungsmeßgerät erfolgen, das die zu beseitigenden Teile unmittelbar « sortiert ». Im Falle einer bekannten Aktivitätsverteilung kann man aber auch längenabhängig die Teile für den Köcher und für den Abschirmbehälter auswählen.

Die Erfindung kann vorteilhaft so weitergebildet werden, daß zwei Scheren für die unterschiedlichen Abschnittslängen vorgesehen sind, die dann zum Beispiel von dem Strahlungsmeßgerät alternativ wirksam gemacht werden. Jedenfalls sollten sich die Längen der Abschnitte mindestens um den Faktor 10 unterscheiden, und zwar auch für den Fall, daß die Erfindung mit einer einzigen Schere verwirklicht wird.

Der Schere kann als Führung ein teleskopierendes Rohr zugeordnet sein, mit dem die Positionen der Detektoren am Reaktor gut angesteuert werden können. Zu diesem Zweck kann das Führungsrohr außerdem schwenkbar ausgebildet sein, vorzugsweise mit einem Kugelgelenk.

An beiden Enden des Führungsrohres kann eine Antriebseinrichtung angeordnet sein. Damit ermöglicht man das gleichmäßige Beschicken der Schere und vermeidet eine Handbetätigung in größerem Umfang, wie später noch näher erläutert wird. Die Antriebseinrichtung an der Schere ist vorzugsweise drehmomentgesteuert. Die andere kann dagegen mit einem Geber an dem der Schere zugekehrten Ende des Führungsrohres verbunden sein. Damit kann die eine Antriebseinrichtung außer Betrieb genommen werden, wenn die Kerninstrumentierungssonde das Ende des Führungsrohres erreicht hat und mithin die zweite Antriebseinrichtung wirksam werden kann.

Die neue Vorrichtung kann baulich vorteilhaft so ausgebildet sein, daß Antriebseinrichtung, Schere und Weiche auf einer Platte angeordnet sind, daß die Platte auf dem Lagerbehälter sitzt, daß der Lagerbehälter den Köcher trägt und auf einem Transportrahmen sitzt. Hierbei bildet der abgeschirmte Lagerbehälter mit seinem größten Gewicht eine Grundlage für den Aufbau der zum Zerlegen notwendigen Einrichtungen. Der Transportrahmen dient zur Bewegung der Vorrichtung in die Arbeitsstellung. Er ist zu diesem Zweck vorteilhaft fahrbar ausgebildet.

Die Platte der Vorrichtung kann ein Stützgestell für die Schere und die Weiche aufweisen. An diesem kann das Teleskoprohr lösbar befestigt sein, so daß der für den Transport der Vorrichtung erforderliche Höhenraum vorteilhaft klein ist.

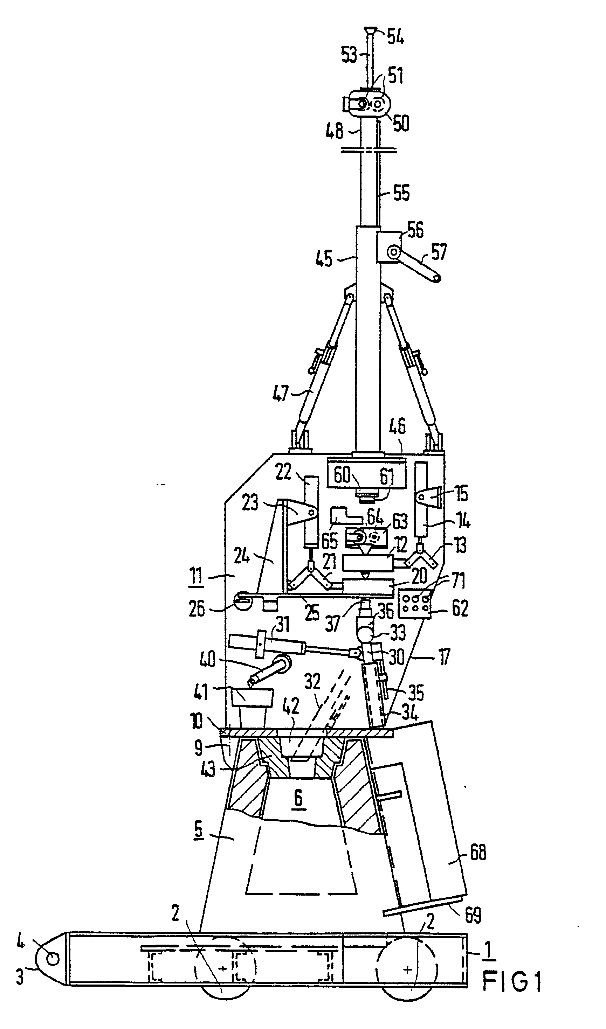

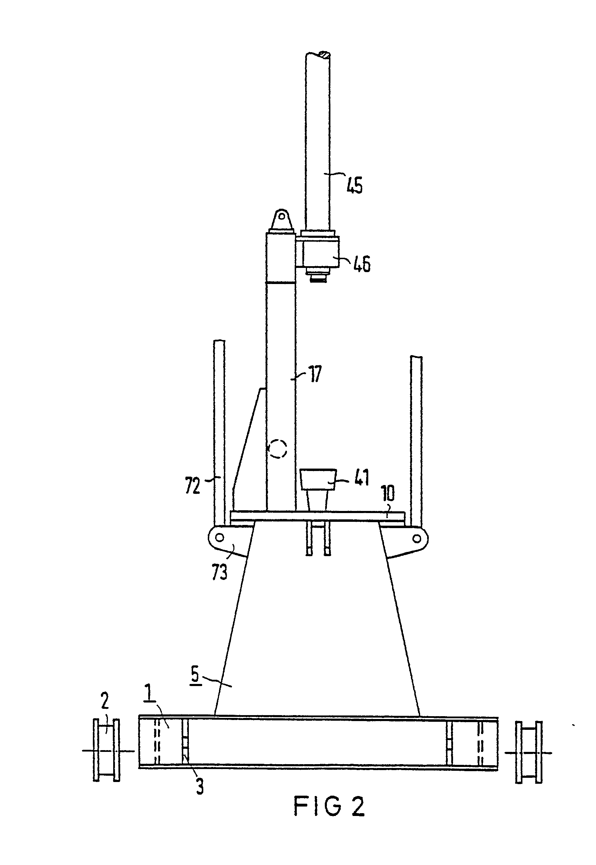

Zur näheren Erläuterung der Erfindung wird anschließend ein Ausführungsbeispiel beschrieben, das in den Fig. 1 und 2 in zwei zueinander senkrechten Ansichten, zum Teil im Schnitt, dargestellt ist.

Mit 1 ist ein Transportrahmen bezeichnet, der aus Blechträgern zusammengesetzt und mit Rädern 2 versehen ist. An einer Stirnseite des Transportrahmens 1 sind Anschlagösen 3 mit Bohrungen 4 vorgesehen, mit denen der Tragrahmen an einer Montagemaschine angekuppelt werden kann.

Auf dem Transportrahmen 1 sitzt ein Lagerbehälter 5 mit der aus der Figur ersichtlichen kegelstumpfförmigen Gestalt. Der Behälter ist mit Wandstärken von 150 mm aus Abschirmmaterial, zum Beispiel Blei, hergestellt, so daß sein Innenraum 6, der ein Volumen von zum Beispiel 15-30 · 10³ cm³ hat, auch stärker strahlende Stoffe aufnehmen kann.

Auf dem Lagerbehälter 5 sitzt eine mit Schrauben 9 befestigte Platte 10 auf. Sie bildet eine Trennstelle zwischen dem Lagerbehälter 5 und der darüber liegenden, als Ganzes mit 11 bezeichneten Schneideinheit. Die Schneideinheit 11 umfaßt eine erste Schere 12, die über einen Kniehebel 13 von einem Elektrozylinder 14 betätigt wird. Der Elektrozylinder, der auch durch einen Druckmittelantrieb ersetzt sein könnte, ist mit einem Lagerbock 15 an einem Stützgestell 17 befestigt, das von der horizontalen Platte 10 vertikal aufragt.

Unter der Schere 12 ist eine zweite Schere 20 vorgesehen, die in gleicher Weise wie die erste Schere 12 ausgebildet sein kann. Sie wird über einen Kniehebel 21 von einem Elektrozylinder 22 betätigt, der in einem Lagerbock 23 schwenkbar befestigt ist. Der Lagerbock 23 ist über eine Konsole 24 mit einem Schwenkarm 25 verbunden, der bei 26 an dem Stützgestell 17 angebracht ist.

Unter dem Schwenkarm 25 sitzt ein Schwenkrohr 30, das als Weiche dient und zu diesem Zweck mit einem Elektroantrieb 31 aus der in ausgezogenen Linien dargestellten einen Endlage in die gestrichelt gezeichnete andere Endposition 32 bewegt werden kann. Das Schwenkrohr 30 ist bei 33 gelagert und besitzt unterhalb des Schwenkpunktes 33 ein Überwurfrohr 34, das mit einer Spindel 35 verfahren werden kann. Oberhalb des Schwenkpunktes 33 ist ein Teleskoprohr 36 vorgesehen, dessen Endstück 37 nach dem Wegschwenken des Armes 25 bis an die Schere 12 ausgefahren werden kann.

Unter dem Antrieb 31 ist ein mit einem Kugelgelenk geführter Arm 40 in dem Stützgestell 17 angebracht. Er dient zum Heben und Schwenken eines Stopfens 41, mit dem die Bohrung 42 an einem trichterähnlichen Deckel 43 des Lagerbehälters 5 verschlossen werden kann.

An dem Stützgestell 17 ist als teleskopierendes Führungsrohr ein Mast 45 in einem Kugelgelenk 46 abgestützt und mit längenverstellbaren Streben 47 zusätzlich verspannt. Das obere Rohr 48 des Teleskops trägt an seinem den Scheren 12, 20 abgekehrten Ende eine Antriebseinrichtung 50 mit Reibrädern 51, die von einem nicht weiter dargestellten Antrieb in Bewegung zu setzen sind. Auf der Antriebseinrichtung 50 ist noch ein Kabeleinzugsrohr 53 angeordnet, das in einen Trichter 54 ausläuft. Das Rohr 48 ist mit Hilfe einer Zahnstange 55 verstellbar, die über einen Teleskopantrieb 56 mit einer Kurbel 57 in Bewegung zu setzen ist.

Am unteren Ende des Mastes 45 ist unterhalb des Gelenks 46 ein Sensor 60 und ein diesem nachgeschalteter Anschlag 61 angebracht. Der Sensor 60 erfaßt das Ankommen einer zu beseitigenden Sonde, die von der Antriebseinheit 50 in den Mast 45 geschoben wird. Er arbeitet zum Beispiel als induktiver Geber, als Ultraschallsensor oder dergleichen und steuert den Antriebsmotor der Antriebseinheit 50 ab, wenn der Sensor 60 erreicht ist. Danach kann die zu beseitigende Sonde von Hand oder durch Handsteuerung der Antriebseinrichtung 50 mit Hilfe der Ortssteuerstelle 62 weitergeführt werden, bis eine zweite Antriebseinrichtung 63 erreicht wird. Diese ist ebenfalls mit Reibrädern 64 ausgerüstet. Ihr nicht weiter dargestellter Antriebsmotor wird jedoch drehmomentabhängig gesteuert.

Zwischen dem Anschlag 61 und der zweiten Antriebseinrichtung 63 ist ein Strahlungsdetektor 65 vorgesehen. Er hat eine Empfindlichkeit im Bereich von 10 bis $10^4$ rem/h und steuert in Abhängigkeit von einem Grenzwert den elektrischen Antrieb 31 für das Schwenkrohr 30 und die Scheren 12 und 20 in folgender Weise :

Die Sonden, die zum Beispiel einen 100 mm langen Detektor und 15 m lange Meßleitungen umfassen, die aus dem nicht weiter dargestellten Kernreaktor herausgezogen werden, werden unterhalb des Grenzwertes mit Hilfe der Schere 20 in etwa 600 mm lange Abschnitte zerschnitten. Diese Stücke werden in der in ausgezogenen Linien dargestellten Lage des Schwenkrohres 30 in einen Köcher 68 eingefüllt, der in eine Halterung 69 am Lagerbehälter 5 eingesetzt ist und keine besondere Abschirmung benötigt.

Mißt der Strahlungsdetektor 65 jedoch eine höhere Aktivität, dann wird der Schneidprozeß gestoppt. Die bisher arbeitende Schere 20 wird dadurch unwirksam gemacht, daß sie mit dem Schwenkarm 25 aus der Betriebsposition gebracht wird. Außerdem wird das Schwenkrohr 30 in die gestrichelt gezeichnete Position 32 übergeführt, in der das Überwurfrohr 34 so weit nach unten gefahren wird, daß es in die Öffnung 42 ragt. Die weiteren stärker strahlenden Abschnitte der Sonde werden nunmehr mit der Schere 12 in 20 bis 30 mm lange Abschnitte zerteilt, die den Innenraum 6 des Behälters 5 gut füllen. Die kürzere Schnittlänge kann durch eine Verringerung der Vorschubgeschwindigkeit oder durch eine Erhöhung der Taktfrequenz der Schere erreicht werden.

Der zweite Teil des Zerlegungsvorganges wird fortgesetzt, bis nach dem Durchlaufen der Meßleitungen der im Durchmesser größere Detektor den Anschlag 61 erreicht. Aus dem Stoppen des Detektors ergibt sich eine bekannte Restlänge, die mit der oberen Schere 12 so zerlegt wird, daß der letzte Schnitt nicht durch den Detektor geht. Dieser wird vielmehr im ganzen in den Lagerbehälter 5 gegeben. Die an dem Stützgestell 17 als Ortssteuerstelle 62 angebrachte Schalttafel mit Drucktasten 71 kann zur Steuerung aller elektrischer Funktionen der Vorrichtung dienen. Die Vorrichtung kann aber auch durch Fernsteuerung von einem nicht weiter dargestellten Steuerpult aus betätigt werden.

In Fig. 2 ist angedeutet, daß die Grundplatte 10 mit dem Stützgestell 17, an dem der Mast 45 gelagert ist, mit Zugstangen 72 an Anschlagösen 73 des Lagerbehälters 5 festgespannt ist. Die Anschlagösen 73 dienen nach der Füllung des Behälters 5 zu dessen Transport in ein Endlager. Mithin ist die Vorrichtung leicht zerlegbar und auch gut zu transportieren. Insbesondere wird durch das Abnehmen des Mastes 45, der am Stützgestell 17 lösbar angebracht ist, die Beweglichkeit in den engen Räumlichkeiten unter einem Reaktordruckbehälter wesentlich verbessert.

## Patentansprüche

1. Vorrichtung zum Beseitigen von länglichen Kerninstrumentierungssonden, insbesondere Strahlungsdetektoren, aus Kernreaktoren, mit einer Führung für die zu beseitigenden Sonden, einer Schere zum Zerlegen in Abschnitte und einem Köcher zur Aufnahme der Abschnitte, dadurch gekennzeichnet, daß die Führung eine Weiche (30) zum Umgehen des Köchers (69) umfaßt, die zusammen mit der Schere (12, 20) so gesteuert wird, daß längere Sondenabschnitte mit einem kleinen Strahlungspegel in den Köcher (68) gelangen, während Sondenteile mit einem höheren Strahlungspegel in mehrfach kleinere Abschnitte zerteilt werden, die in einen abgeschirmten Lagerbehälter (5) geführt werden.

2. Vorrichtung nach Anspruch 1, dadurch gekennzeichnet, daß zur Steuerung der Weiche (30) und der Schere (12, 20) ein Strahlungsmeßgerät (65) vorgesehen ist.

3. Vorrichtung nach Anspruch 1 oder 2, dadurch gekennzeichnet, daß zwei Scheren (12, 20) vorgesehen sind, die alternativ wirksam gemacht werden.

4. Vorrichtung nach Anspruch 1, 2 oder 3, dadurch gekennzeichnet, daß sich die Längen der beiden verschiedenen Abschnitte mindestens um den Faktor 10 unterscheiden.

5. Vorrichtung nach einem der Ansprüche 1 bis 4, dadurch gekennzeichnet, daß die Führung ein teleskopierendes Rohr (45) umfaßt.

6. Vorrichtung nach Anspruch 5, dadurch gekennzeichnet, daß an beiden Enden des Rohres (45) eine Antriebseinrichtung (50, 63) angeordnet ist.

7. Vorrichtung nach Anspruch 6, dadurch gekennzeichnet, daß die Antriebseinrichtung (63) an dem der Schere (12, 20) zugekehrten Ende drehmomentgesteuert ist.

8. Vorrichtung nach Anspruch 7, dadurch gekennzeichnet, daß die andere Antriebseinrichtung (50) mit einem Geber (60) an dem der Schere (12, 20) zugekehrten Ende des Rohres (45) verbunden ist.

9. Vorrichtung nach einem der Ansprüche 1 bis 8, dadurch gekennzeichnet, daß Antriebseinrichtung (50, 63), Schere (12, 20) und Weiche (30) auf einer Platte (10) angeordnet sind, daß die Platte (10) auf dem Lagerbehälter (5) sitzt, daß der Lagerbehälter (5) den Köcher (68) trägt und auf einem Transportrahmen (1) sitzt, der fahrbar ausgebildet ist.

10. Vorrichtung nach Anspruch 9, dadurch gekennzeichnet, daß die Platte (10) ein Stützgestell (17) für die Schere (12, 20) und die Weiche (30) aufweist und daß auf dem Stützgestell (17) das Rohr (45) lösbar befestigt ist.

## Claims

1. A device for removing elongate nuclear instrumentation probes, in particular radiation detectors, from nuclear reactors, comprising a guide for the probes to be removed, shears for dividing into sections and a tubular container for accommodating the sections, characterised in that the guide comprises a switch (30) for bypassing the tubular container (69), which switch, together with the shears (12, 20), is controlled in such a manner that long probe sections with a small radiation level arrive in the tubular container (68), whilst probe parts with a high radiation level are divided into much smaller sections which are led into a screened storage container (5).

2. A device as claimed in Claim 1, characterised in that a radiation measuring device (65) is provided for controlling the switch (30) and the shears (12, 20).

3. A device as claimed in Claim 1 or Claim 2, characterised in that two shears (12, 20) are provided which are alternatively rendered operable.

4. A device as claimed in Claim 1, 2 or 3, characterised in that the lengths of the two different sections differ by at least a factor of 10.

5. A device as claimed in one of Claims 1 to 4, characterised in that the guide comprises a telescopic tube (45).

6. A device as claimed in Claim 5, characterised in that a drive arrangement (50, 63) is arranged at either end of the tube (45).

7. A device as claimed in Claim 6, characterised in that at the end facing the shears (12, 20), the drive arrangement (63) is torque-controlled.

8. A device as claimed in Claim 7, characterised in that the other drive arrangement (50) is connected to a generator (60) at the end facing the shears (12, 20).

9. A device as claimed in one of Claims 1 to 8, characterised in that the drive arrangement (50, 63), the shears (12, 20) and the switch (30) are arranged on a plate (10) ; that the plate (10) is positioned on the storage container (5) ; that the storage container (5) supports the tubular container (68) and is positioned on a transport frame (1) which is movable.

10. A device as claimed in Claim 9, characterised in that the plate (10) has a supporting frame (17) for the shears (12, 20) and the switch (30) ; and that the tube (45) is detachably secured to the supporting frame (17).

## Revendications

1. Installation pour éliminer des sondes oblongues d'instrumentation nucléaire, notamment des détecteurs de rayonnement, de réacteurs nucléaires, comprenant un dispositif de guidage des sondes à éliminer, des cisailles pour les cisailler en tronçons et un collecteur des tronçons, caractérisée en ce que le dispositif de guidage comporte, pour contourner le collecteur (69), un aiguillage (30) qui est commandé, ensemble avec les cisailles (12, 20), de manière à ce que des tronçons de sonde assez longs ayant un faible niveau de rayonnement parviennent au collecteur (68) tandis que des parties de sonde ayant un niveau de rayonnement plus élevé sont fragmentées en des tronçons plusieurs fois plus petits, qui sont envoyés dans un récipient de stockage (5) blindé.

2. Installation suivant la revendication 1, caractérisée en ce que, pour la commande de l'aiguillage (30) et des cisailles (12, 20), est prévu un appareil de mesure de rayonnement (65).

3. Installation suivant la revendication 1 ou 2, caractérisée en ce qu'il est prévu deux paires de cisailles (12, 20) qui entrent en action alternativement.

4. Installation suivant la revendication 1, 2 ou 3, caractérisée en ce que les longueurs des deux tronçons différents sont différents d'au moins un facteur de 10.

5. Installation suivant l'une des revendications 1 à 4, caractérisée en ce que le dispositif de guidage comprend un tube télescopique (45).

6. Installation suivant la revendication 5, caractérisée en ce qu'aux deux extrémités du tube (45) est disposé un dispositif d'entraînement (50, 63).

7. Installation suivant la revendication 6, caractérisée en ce que le dispositif d'entraînement (63), à l'extrémité opposée aux cisailles (12, 20), est commandé en fonction du couple de rotation.

8. Installation suivant la revendication 7, caractérisée en ce que l'autre dispositif d'entraînement (50) est relié à un détecteur (60) à l'extrémité du tube (45) qui est tournée vers les cisailles (12, 20).

9. Installation suivant l'une des revendications 1 à 8, caractérisée en ce que le dispositif d'entraînement (50, 63), les cisailles (12, 20) et l'aiguillage (30) sont disposés sur un plateau (10), en ce que le plateau (10) repose sur le récipient de stockage (5), en ce que le récipient de stockage (5) porte le collecteur (68), et s'appuie sur un cadre de transport (1) qui est constitué de manière à pouvoir être déplacé.

10. Installation suivant la revendication 9, caractérisée en ce que le plateau (10) présente un bâti d'appui (17) pour les cisailles (12, 20) et pour l'aiguillage (30), et en ce que le tube (45) est fixé de manière amovible sur le bâti d'appui (17).

FIG 1

FIG 2